# EUROPEAN PATENT SPECIFICATION

(11) **EP 1 524 826 B1**
(45) Date of publication and mention of the grant of the patent: **04.10.2006**
(21) Application number: 03023089.0
(22) Date of filing: 15.10.2003
(51) Int. Cl.: H04M 1/725, H04M 1/57

(54) **Notification of events using MMS in a portable communication device**
Ereignismeldung durch MMS in einem tragbaren Kommunikationsgerät
Notification d'événements par MMS dans un appareil de communication portable

(43) Date of publication of application: 20.04.2005
(73) Proprietor: Sony Ericsson Mobile Communications AB, 221 88 Lund (SE)
(72) Inventor: Hermansson, Jonas, 168 56 Bromma (SE)
(74) Representative: Dahnér, Christer

(56) References cited:
- EP-A- 1 278 361
- GB-A- 2 386 299
- US-A1- 2003 016 800
- US-A1- 2003 086 547

## Description

### TECHNICAL FIELD OF THE INVENTION

The present invention relates to the field of computer communication and telecommunication. More particularly the present invention relates to a method of using playable electronic media messages for notification of events in a portable communication device, such a portable communication device as well as a computer program product and a computer program element for performing the method.

### DESCRIPTION OF RELATED ART

It is known within the field of portable communication devices to receive different types of messages, like e-mail and SMS (Short Message Service). In cases of e-mail it is also known to attach different types of files to an e-mail, where these files can be video-files, text files, audio files or image files. Recently there has been a development of a new type of messages in wireless communications. These messages are called MMS (Multimedia Messaging Service) messages. In these MMS messages it is possible to include such things as photos, sound files or video files. The files that can be included can also be presented directly to a recipient without having to be extracted and played separately by him or her.

It is also known to provide a calendar in computers and cellular phones.

It is furthermore known to receive ring signals to be used in portable communication devices. Today data about the ring signal to be used is included in an SMS-message sent to the portable communication device in question. In the portable communication device the data is then extracted from the message and stored for later use as a ring signal. This ring signal can then be used as a default ring signal for all incoming calls or as a ring signal to be used for only some calls, for instance according to settings in a contacts register of the portable communication device. Both the message and the ring signal are then provided in the portable communication device, which takes up unnecessary memory space, especially if the number of files are many. In order to delete redundant information a user then has to delete the electronic message himself, with which is associated unnecessary labour and irritation for the user. It is also known to provide images related to contacts, which images can be actuated in relation to received calls from the contact in question.

US-2003/0016800 describes a system that provides multimedia data in relation to a call being set up from a sender to a receiver. Here the multimedia data is multiplexed as caller identification information and sent from one phone to another. This is used for notifying of the call in progress i.e. as part of the caller information.

US-2003/0086547 describes a phone having a multimedia phone directory, which can be used for prompting of a call. Here different sets of multimedia data can be set up according to a certain format. One such set can be used for prompting calls from one user or a group of users calling the phone. The multimedia data is recorded in the device or directly transferred to it from another device like a PC.

In view of this it would be beneficial to provide an easier way to obtain ring signals and other types of notifications to a user, especially if the notification is to include several different types of media content that are synchronised with each other. It would also be beneficial if the provision of this notification were not associated with unnecessary use of memory space or requiring efforts by a user in order to remove superfluous data.

### SUMMARY OF THE INVENTION

The present invention is directed towards solving the problem of providing an easier way to obtain notifications for a user of a portable communication device that is not associated with unnecessary use of memory space or requires efforts made by the user in order to remove superfluous data and that allows the use of different types of synchronised media content.

This problem is according to the invention solved through obtaining at least one playable electronic media message and setting the message for use as a notification of at least one event related to the portable communication device, such that the portable communication device can play the electronic media message in order to notify a user of the event.

One object of the present invention is to provide a method of using playable electronic media messages that provides an easier way to obtain notifications for a user of a portable communication device that is not associated with unnecessary use of memory space or requires efforts made by the user in order to remove superfluous data and that allows the use of different types of synchronised media content.

According to a first aspect of the present invention this object is achieved by a method of using playable electronic media messages for notification of events in a portable communication device comprising the steps of:
receiving at least one playable electronic media message from a network,
setting the message as a notification of events related to the portable communication device,
storing the message,
detecting the occurrence of an event for which the electronic media message has been set as a notification,
retrieving the stored message, and
playing the multimedia message in dependence of the detection.

A second aspect of the present invention includes the features of the first aspect, wherein the event is an event in the group of types including receiving a phone call, receiving an electronic message or notification of an appointment according to a calendar setting.

A third aspect of the present invention includes the features of the first aspect, wherein the message includes a media file in the form of a sound file arranged to be synchronised with at least one other media file of another type.

A fourth aspect of the present invention includes the features of the first aspect, wherein the message includes a media file in the form of an image file arranged to be synchronised with at least one other media file of another type.

A fifth aspect of the present invention includes the features of the first aspect, wherein the message includes a media file in the form of a text file arranged to be synchronised with at least one other media file of another type.

A sixth aspect of the present invention includes the features of the first aspect, wherein the step of setting comprises setting the message as a notification for all events of a certain type.

A seventh aspect of the present invention includes the features of the first aspect, wherein the step of setting comprises setting the message as a notification for just some events of a certain type.

Another object of the present invention is to provide a portable communication device that provides an easier way to obtain notifications for a user of a portable communication device that is not associated with unnecessary use of memory space or requires efforts made by the user in order to remove superfluous data and that allows the use of different types of synchronised media content.

According to an eighth aspect of the present invention, this object is achieved by a portable communication device for using playable electronic media messages for notification of events and comprising:
an event handling unit,
a message storage,
a notification setting storage,
a radio circuit, and
a playable electronic media message handling unit, wherein the playable electronic media message handling unit is arranged to receive at least one playable electronic media message from a network, set the message as a notification of events handled by the event handling unit and store the message in the message storage, and
the event handling unit is arranged to detect the occurrence of an event for which the electronic media message has been set as a notification, retrieve the stored message from the message storage and order the playable electronic media message handling unit to play the electronic media message in dependence of the detection.

A ninth aspect of the present invention includes the features of the eight aspect, wherein the event handling unit is any in the group of call handling unit, calendar or message handling unit.

A tenth aspect of the present invention includes the features of the eighth aspect, wherein the message includes a media file in the form of a sound file arranged to be synchronised with at least one other media file of another type.

A eleventh aspect of the present invention includes the features of the eighth aspect, wherein the message includes a media file in the form of an image file arranged to be synchronised with at least one other media file of another type.

A twelfth aspect of the present invention includes the features of the eighth aspect, wherein the message includes a media file in the form of a text file arranged to be synchronised with at least one other media file of another type.

A thirteenth aspect of the present invention includes the features of the eighth aspect, wherein the playable electronic media message handling unit is arranged to set the message for use as a notification for all events of a certain type.

A fourteenth aspect of the invention includes the features of the eighth aspect, wherein the playable electronic media message handling unit is arranged to set the message for use as a notification for just some events of a certain type.

A fifteenth aspect of the invention includes the features of the eighth aspect, wherein the device is a cellular phone.

Yet another object of the present invention is to provide a computer program element that provides an easier way to obtain notifications for a user of a portable communication device that is not associated with unnecessary use of memory space or requires efforts made by the user in order to remove superfluous data and that allows the use of different types of synchronised media content.

According to a sixteenth aspect of the present invention this object is furthermore achieved by a computer program element comprising:
computer program code means to make a portable communication device execute, when said program element is loaded in the portable communication device,
receive at least one playable electronic media message from a network, set the message as a notification of events related to the portable communication device, store the message,
detect the occurrence of an event for which the electronic media message has been set as a notification,
retrieve the stored message, and
play the electronic media message in dependence of the detection.

According to a seventeenth aspect of the present invention this object is furthermore achieved by a computer program product comprising a computer readable medium, having thereon a computer program element according to the sixteenth aspect.

The invention has the following advantages. It does not use unnecessary memory space for saving redundant information regarding notifications and consequently the user does not have to delete this redundant information. It is easy to implement. It can be implemented by just some slight modifications of the software in the portable communication device, which also makes the additional costs associated with the invention low. It allows an easier and freer use of diversified notifications. Users can furthermore generate their own personalised notifications and send them to each other.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 shows an portable communication device in the form of a cellular phone,
fig. 2 shows the phone in fig. 1 connected to a cellular network,
fig. 3 shows a block schematic of the relevant parts of the phone in fig. 1,
fig. 4 shows a flow chart of a method of performing the method according to a preferred embodiment of the invention, and
fig. 5 shows a CD Rom on which program code for executing the method according to the invention is provided.

### DETAILED DESCRIPTION OF EMBODIMENTS

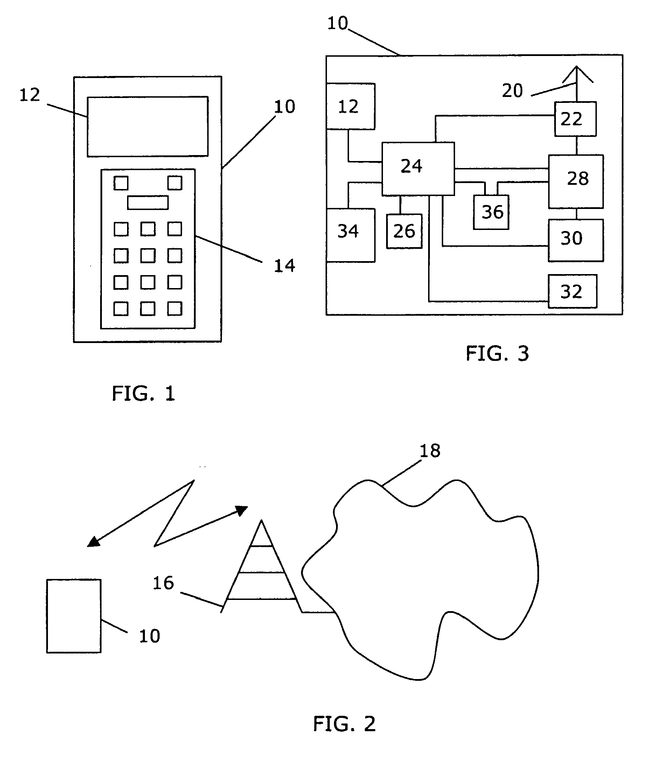

A portable communication device 10 according to the invention is shown in fig. 1. In the preferred embodiment the device is a cellular phone 10 having a display 12 and a keypad 14 including a number of keys. The keypad 14 is used for entering information such as selection of functions and responding to prompts and the display 12 is used for displaying functions and prompts to a user of the phone. The phone also includes an antenna, which is used for communication with other users via a network. However the antenna is in-built in the phone and hence not shown in the figure. The phone also includes a speaker for presenting sounds to a user, which speaker is also not shown. A cellular phone is just one example of a device in which the invention can be implemented. The invention can for instance also be used in a PDA (personal digital assistant), a palm top computer, a lap top computer or a smartphone. It is however advantageous if the device has access to some kind of network over which messages can be received.

Fig. 2 shows the cellular phone 10 connected to a cellular network 18 via a base station 16. The network is normally a GPRS network. It is of course also possible that the network is a 3G network such as a WCDMA network. The network does not have to be a cellular network but can be some type of network, such as Internet, a corporate intranet, a LAN or a wireless LAN provided that playable electronic messages are supported.

Fig. 3 shows part of the interior of the cellular phone that is relevant for the present invention. The phone 10 includes an antenna 20 connected to a radio circuit 22 for enabling radio communication with the network of fig. 2. The radio circuit 22 is connected to a playable electronic media message handling unit 24, which in the preferred embodiment is a unit that handles playable electronic media messages in the form of so-called multimedia messages (MMS). The message handling unit 24 is connected to the display 12 and to a speaker 34 for presenting sound, text and images to a user of the phone 10. The message handling unit 24 is connected to an MMS storage 26. The radio circuit 22 is also connected to a first event handling unit 28, which in the preferred embodiment is a call handling unit for handling incoming and outgoing calls. The first event handling unit 28 is connected to a contacts register 30, which includes information about contacts of the user of the phone, such as phone number of the contacts and notifications to be used when an event is detected, such as when an incoming call is received from a contact. Both the contacts register 30 and the call handling unit 28 are connected to the message handling unit 24. The message handling unit 24 and the call handling unit 28 are furthermore both connected to a notification setting storage 36. The phone 10 also includes a second event handling unit 32 in the form of a calendar, which can be used for setting appointments for the user, such as meetings. The calendar 32 is also connected to the message handling unit 24. It should be realised that the call handling unit 28 and the calendar 32 are normally using the display 12 and in case of need the speaker 34 and that the information of the contacts register can be presented on the display 12. This is however not shown in the figure for easier understanding of the invention. How a message handling unit, a call handling unit, a contacts register and a calendar generally function is furthermore well known to the man skilled in the art and will therefore not be further described here. The invention is directed towards a special feature of the message handling unit.

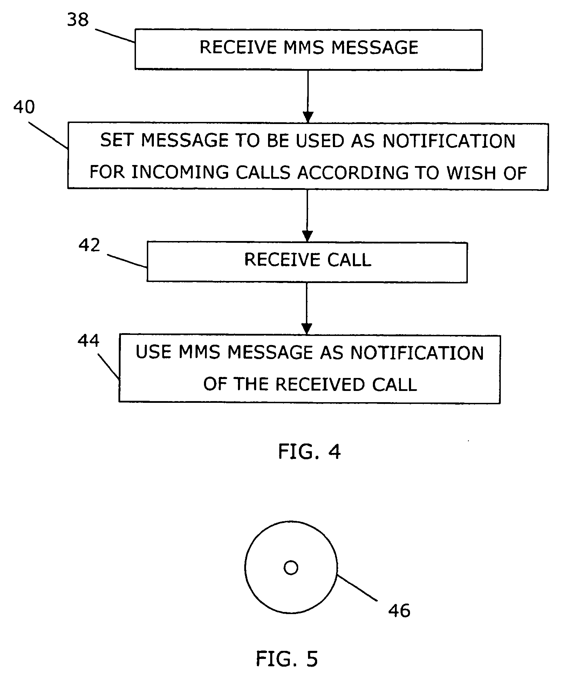

The functioning of the present invention according to an embodiment will now be described in relation to the previously described fig. 1 - 3 together with fig. 4, which shows a flow chart of a preferred embodiment of a method according to the invention.

The phone 10 according to the invention can send and receive MMS messages using the message handling unit 24 in combination with the radio circuit 22 and antenna 20. These MMS messages can typically include sound files, text files as well as image files both still image and moving image files. The MMS message format allows the included files to be presented to the user of the phone by the message handling unit 24, such that a user of the phone can simultaneously both see and hear the presented information using the display 12 and the speaker 34. This format thus allows the presentation of the different files synchronised with each other, which synchronisation information is provided in the MMS message format. If the phone is provided with a camera the user can furthermore create his own MMS messages that include both sound and image and send these MMS messages to friends and contacts. It is furthermore possible for the user of a phone to receive images from somebody else like another phone or to download an image for instance from the Internet and add text and sound for creating an MMS.

The method according to the invention starts with an MMS message being obtained through receiving an MMS message by the message handling unit 24 from the network 18 via the antenna 20 and the radio circuit 22, step 38. It should here be realised that the invention is not limited to the reception of an MMS message, but that it can equally as well be applied on an MMS message generated by the user of the phone or be used on a previously received and stored message. After the reception of the message, the message handling unit 24 notifies a user of the phone of the message and asks if the user wants to use the MMS message as a notification for an event, which event is the reception of a phone call in this embodiment of the invention, i.e. to replace the ring signal of the phone with the MMS message. If the user then selects to use the MMS message as a notification, the message handling unit 24 sets the message to be used as a notification for incoming calls by setting a default setting for notification of all calls in the notification setting storage 36, step 40. This storage is a default storage, which means that the MMS message is set as a notification for all incoming calls. The message handling unit 24 then stores the MMS message in the MMS storage 26. As an alternative the user can look in a ring signal menu, and select from existing MMS messages in the phone to be used as a notification of incoming calls. When an event is detected in the form of a received call, step 42, which call is received via the antenna 20 and the radio circuit 22 and handled by the call handling unit 28, the call handling unit 28 looks in the notification setting storage 36 to see what kind of notification is to be used. The call handling unit 28 identifies the setting made in the notification setting storage 36 and contacts the message handling unit 24 in order to use the MMS message as notification. The message handling unit 24 then retrieves the MMS message from the MMS storage 26 and plays the message, such that it is used as a notification for the incoming call, step 44.

In this way an MMS message is used for notification of incoming calls. The played message can then be synchronised regarding sound, text and image for further enhanced effects.

There are a number of variations that are possible here. A user might select to use the MMS message as a notification for incoming calls for only one or some phone numbers. In this case the user gets to select for which numbers the MMS message are to be used by settings in the contacts register. Therefore the message handling unit would then present the contacts register to the user and also set the notification for each contact that the user wants the MMS message to be used. Alternatively the contacts are presented to the user individually, who then selects what MMS is to be used for notification on a contact-by-contact basis. The call handling unit then consults the contacts register for finding out if a default notification or the MMS message is to be used. If the phone number of an incoming call then corresponds to the setting in the contacts register, the MMS message is used for notifying the user of the incoming call in the same manner as was described above.

The invention is not limited to use for incoming calls. It can also be used for notification of incoming electronic messages either by using a default notification or a notification setting for the contact from whom the message is received. The different types of registers and storages can be set such that incoming electronic messages are notified to the user in the same way as was described above, but then there is of course no call handling unit involved, but a message handling unit, which can be different than the MMS message handling unit, for instance an SMS message handling unit, or the same message handling unit.

The invention can also be used for notification of meetings and other appointments set in a calendar. In this case the message handling unit sets the calendar to use the MMS message as a notification, and when a meeting or some other appointment is about to start, the calendar contacts the message handling unit, such that it plays the MMS message in order to inform the user of the start of the appointment.

The setting of notification can, as was mentioned earlier, be made independently of the reception of the MMS message. In this case the notification can be set in a settings menu in the menu system of the phone.

The different units according to the present invention are preferably provided in the form of one or more processors with corresponding memory containing the program code and the storages and registers are provided in the form of memories containing the contact information and specialised messages.

The program code mentioned above can also be provided on a data carrier such as a CD ROM disc 46 as depicted in fig. 5 or an insertable memory stick, which will perform the invention when loaded into a computer or into a phone having suitable processing capabilities. The program code can also be downloaded remotely from a server either outside or inside the cellular network or be downloaded via a computer like a PC to which the phone is temporarily connected.

The present invention has several advantages. It does not use unnecessary memory space for saving redundant information regarding notifications and consequently the user does not have to delete this redundant information. It is easy to implement. It can be implemented by just some slight modifications of the software in the phone. This also makes the cost of the invention low. It allows an easier and freer use of diversified notifications. Users can generate their own personalised notifications and send them to each other. By the use of MMS it is furthermore possible to provide visual and sound effects synchronised with each other in a simple fashion.

The messages sent are preferably MMS messages. The invention is however not limited to these types of messages. It can be used for any type of playable electronic media messages.

## Claims

1. Method of using playable electronic media messages for notification of events in a portable communication device (10) comprising the steps of:
receiving at least one playable electronic media message from a network, (step 38),
setting the message as a notification of events related to the portable communication device, (step 40),
storing the message,
detecting the occurrence of an event for which the electronic media message has been set as a notification, (step 42),
retrieving the stored message, and
playing the electronic media message in dependence of the detection (step 44).

2. Method according to any previous claim, wherein the event is an event in the group of types including receiving a phone call, receiving an electronic message or notification of an appointment according to a calendar setting.

3. Method according to any previous claim, wherein the message includes a media file in the form of a sound file arranged to be synchronised with at least one other media file of another type.

4. Method according to claim 3, wherein the message includes a media file in the form of an image file arranged to be synchronised with at least one other media file of another type.

5. Method according to claim 3 or 4, wherein the message includes a media file in the form of a text file arranged to be synchronised with at least one other media file of another type.

6. Method according to any previous claim, wherein the step of setting comprises setting the message as a notification for all events of a certain type.

7. Method according to any of claims 1 - 5, wherein the step of setting comprises setting the message as a notification for just some events of a certain type.

8. Portable communication device (10) for using playable electronic media messages for notification of events and comprising:
an event handling unit (24; 28; 32),
a message storage,
a notification setting storage (36),
a radio circuit (22), and
a playable electronic media message handling unit (24), wherein the playable electronic media message handling unit is arranged to receive at least one playable electronic media message from a network, set the message as a notification of events handled by the event handling unit and store the message in the message storage, and
the event handling unit (24; 28; 32) is arranged to detect the occurrence of an event for which the electronic media message has been set as a notification, retrieve the stored message from the message storage and order the playable electronic media message handling unit to play the electronic media message in dependence of the detection.

9. Portable communication device according to claim 8, wherein the event handling unit is any in the group of call handling unit (28), calendar (32) or message handling unit (24).

10. Portable communication device according to claims 8 or 9, wherein the message includes a media file in the form of a sound file arranged to be synchronised with at least one other media file of another type.

11. Portable communication device according to any of claims 8 - 10, wherein the message includes a media file in the form of an image file arranged to be synchronised with at least one other media file of another type.

12. Portable communication device according to any of claims 8 - 11, wherein the message includes a media file in the form of a text file arranged to be synchronised with at least one other media file of another type.

13. Portable communication device according to any of claims 8 - 12, wherein the playable electronic media message handling unit is arranged to set the message as a notification for all events of a certain type.

14. Portable communication device according to any of claims 8 - 12, wherein the playable electronic media message handling unit (24) is arranged to set the message as a notification for just some events of a certain type.

15. Portable communication device according to any of claims 8 - 14, wherein it is a cellular phone.

16. A computer program element comprising:
computer program code means to make a portable communication device (10) execute, when said program element is loaded in the portable communication device,
receive at least one playable electronic media message from a network,
set the message as a notification of events related to the portable communication device, store the message,
detect the occurrence of an event for which the electronic media message has been set as a notification,
retrieve the stored message, and
play the electronic media message in dependence of the detection.

17. A computer program product (46) comprising a computer readable medium, having thereon a computer program element according to claim 16.

## Patentansprüche

1. Verfahren der Verwendung von Nachrichten mit abspielbaren, elektronischen Medien zur Benachrichtigung über Ereignisse in einem tragbaren Kommunikationsgerät (10), umfassend die Schritte:
Empfang wenigstens einer Nachricht mit abspielbaren, elektronischen Medien aus einem Netzwerk, (Schritt 38),
Festlegen der Nachricht als eine Benachrichtigung über Ereignisse, die in Zusammenhang mit dem tragbaren Kommunikationsgerät stehen, (Schritt 40), Speichern der Nachricht,
Detektion des Eintritts eines Ereignisses, für welches die Nachricht mit den elektronischen Medien als eine Benachrichtigung festgelegt wurde, (Schritt 42),
Abruf der gespeicherten Nachricht, und
Abspielen der Nachricht mit elektronischen Medien in Abhängigkeit von der Detektion (Schritt 44).

2. Verfahren gemäß einem der vorhergehenden Ansprüche, worin das Ereignis ein Ereignis aus der Gruppe von Arten ist, die den Empfang eines Telefonanrufs, den Empfang einer elektronischen Nachricht oder die Benachrichtigung über eine Verabredung gemäß einer Kalenderfestlegung beinhaltet.

3. Verfahren gemäß einem der vorhergehenden Ansprüche, worin die Nachricht eine Mediendatei in der Form einer Tondatei beinhaltet, die zur Synchronisation mit wenigstens einer anderen Mediendatei einer anderen Art aufgebaut ist.

4. Verfahren gemäß Anspruch 3, worin die Nachricht eine Mediendatei in der Form einer Bilddatei beinhaltet, die zur Synchronisation mit wenigstens einer anderen Mediendatei einer anderen Art aufgebaut ist.

5. Verfahren gemäß Anspruch 3 oder 4, worin die Nachricht eine Mediendatei in der Form einer Textdatei beinhaltet, die zur Synchronisation mit wenigstens einer anderen Mediendatei einer anderen Art aufgebaut ist.

6. Verfahren gemäß einem der vorhergehenden Ansprüche, worin der Schritt des Festlegens das Festlegen der Nachricht als eine Benachrichtigung über alle Ereignisse eines bestimmten Typs umfasst.

7. Verfahren gemäß einem der Ansprüche 1 - 5, worin der Schritt des Festlegens das Festlegen der Nachricht als eine Benachrichtigung über lediglich einige Ereignisse eines bestimmten Typs umfasst.

8. Tragbares Kommunikationsgerät (10) zur Verwendung von Nachrichten mit abspielbaren, elektronischen Medien zur Benachrichtigung über Ereignisse und umfassend:
eine Ereignisbearbeitungseinheit (24; 28; 32),
ein Nachrichtenspeicher,
ein Benachrichtigungsfestlegungsspeicher (36),
eine Funkschaltung (22), und
eine Bearbeitungseinheit (24) für die Nachricht mit abspielbaren, elektronischen Medien, worin
die Bearbeitungseinheit für die Nachricht mit abspielbaren, elektronischen Medien für den Empfang wenigstens einer Nachricht mit abspielbaren, elektronischen Medien aus einem Netzwerk, zum Festlegen der Nachricht als Benachrichtigung über Ereignisse, die von der Ereignisbearbeitungseinheit bearbeitet werden, und zum Speichern der Nachricht im Nachrichtenspeicher aufgebaut ist, und worin
die Ereignisbearbeitungseinheit (24; 28; 32) zur Detektion des Eintritts eines Ereignisses, für welches die Nachricht mit elektronischen Medien als eine Benachrichtigung festgelegt wurde, zum Abruf der gespeicherten Nachricht aus dem Nachrichtenspeicher und zum Anweisen der Bearbeitungseinheit für die Nachricht mit abspielbaren, elektronischen Medien, die Nachricht mit elektronischen Medien abzuspielen, in Abhängigkeit von der Detektion, aufgebaut ist.

9. Tragbares Kommunikationsgerät gemäß Anspruch 8, worin die Ereignisbearbeitungseinheit irgendeine aus der Gruppe aus Anrufbearbeitungseinheit (28), Kalender (32) oder Nachrichtenbearbeitungseinheit (24) ist.

10. Tragbares Kommunikationsgerät gemäß den Ansprüchen 8 oder 9, worin die Nachricht eine Mediendatei in der Form einer Tondatei beinhaltet, die zur Synchronisation mit wenigstens einer anderen Mediendatei einer anderen Art aufgebaut ist.

11. Tragbares Kommunikationsgerat gemäß einem der Ansprüche 8 - 10, worin die Nachricht eine Mediendatei in der Form einer Bilddatei beinhaltet, die zur Synchronisation mit wenigstens einer anderen Mediendatei einer anderen Art aufgebaut ist.

12. Tragbares Kommunikationsgerät gemäß einem der Ansprüche 8 - 11, worin die Nachricht eine Mediendatei in der Form einer Textdatei beinhaltet, die zur Synchronisation mit wenigstens einer anderen Mediendatei einer anderen Art aufgebaut ist.

13. Tragbares Kommunikationsgerät gemäß einem der Ansprüche 8 - 12, worin die Bearbeitungseinheit so aufgebaut ist, dass die Nachricht als eine Benachrichtigung über alle Ereignisse eines bestimmten Typs festgelegt wird.

14. Tragbares Kommunikationsgerät gemäß einem der Ansprüche 8 - 12, worin die Bearbeitungseinheit so aufgebaut ist, dass die Nachricht als eine Benachrichtigung über lediglich einige Ereignisse eines bestimmten Typs festgelegt wird.

15. Tragbares Kommunikationsgerät gemäß einem der Ansprüche 8 - 14, worin es ein Mobiltelefon ist.

16. Computerprogrammelement, umfassend:
Computerprogrammcodemittel, um zu bewirken:
die Aktivierung eines tragbaren Kommunikationsgeräts (10), wenn das Programmelement in das tragbare Kommunikationsgerät geladen wird,
den Empfang wenigstens einer Nachricht mit abspielbaren, elektronischen Medien aus einem Netzwerk,
das Festlegen der Nachricht als eine Benachrichtigung über Ereignisse, die in Zusammenhang mit dem tragbaren Kommunikationsgerät stehen,
das Speichern der Nachricht,
die Detektion des Eintritts eines Ereignisses, für welches die Nachricht mit den elektronischen Medien als eine Benachrichtigung festgelegt wurde,
den Abruf der gespeicherten Nachricht, und
das Abspielen der Nachricht mit elektronischen Medien in Abhängigkeit von der Detektion.

17. Computerprogrammprodukt (46) umfassend ein Computer-lesbares Medium mit einem Computerprogrammelement gemäß Anspruch 16 darauf.

## Revendications

1. Procédé d'utilisation de messages sur support électronique pouvant être lus pour la notification d'événements dans un dispositif de communication portable (10), comprenant les étapes qui consistent :
à recevoir au moins un message sur support électronique pouvant être lu depuis un réseau (étape 38),
à établir le message en tant que notification d'événements associés au dispositif de communication portable (étape 40),
à stocker le message,
à détecter l'apparition d'un événement pour lequel le message sur support électronique a été établi comme notification (étape 42),
à récupérer le message stocké, et
à lire le message sur support électronique en fonction de la détection (étape 44).

2. Procédé selon l'une quelconque des revendications précédentes, dans lequel l'événement est un événement dans le groupe de types comprenant la réception d'un appel téléphonique, la réception d'un message électronique ou la notification d'un rendez-vous selon un agenda.

3. Procédé selon l'une quelconque des revendications précédentes, dans lequel le message comprend un fichier de support sous la forme d'un fichier sonore agencé de façon être synchronisé avec au moins un autre fichier de support d'un autre type.

4. Procédé selon la revendication 3, dans lequel le message comprend un fichier de support sous la forme d'un fichier d'image agencé de façon à être synchronisé avec au moins un autre fichier de support d'un autre type.

5. Procédé selon la revendication 3 ou 4, dans lequel le message comprend un fichier de support sous la forme d'un fichier de texte agencé de façon à être synchronisé avec au moins un autre fichier de support d'un autre type.

6. Procédé selon l'une quelconque des revendications précédentes, dans lequel l'étape d'établissement comprend l'établissement du message en tant que notification pour tous les événements d'un certain type.

7. Procédé selon l'une quelconque des revendications 1 à 5, dans lequel l'établissement comprend l'établissement du message en tant que notification uniquement pour certains événements d'un certain type.

8. Dispositif de communication portable (10) pour l'utilisation de messages de support électronique lisibles pour la notification d'événements et comportant :
une unité (24 ; 28 ; 32) de traitement d'événement,
une mémoire de stockage de messages,
une mémoire (36) de stockage d'établissement de notification,
un circuit radio (22), et
une unité (24) de traitement de message de support électronique lisible, dans lequel
l'unité de traitement de message de support électronique lisible est agencée de façon à recevoir au moins un message de support électronique lisible depuis un réseau, à établir le message en tant qu'une notification d'événements traités par l'unité de traitement d'événement et à stocker le message dans la mémoire de stockage de messages, et
l'unité de traitement d'événement (24 ; 28 ; 32) est agencée de façon à détecter l'apparition d'un événement pour lequel le message de support électronique a été établi en tant que notification, à récupérer le message stocké depuis la mémoire de stockage de messages et à ordonner à l'unité de traitement du message de support électronique lisible d'afficher le message de support électronique en fonction de la détection.

9. Dispositif de communication portable selon la revendication 8, dans lequel l'unité de traitement d'événement est l'un quelconque du groupe d'une unité (28) de traitement d'appel, d'un agenda (32) ou une unité (24) de traitement de message.

10. Dispositif de communication portable selon la revendication 8 ou 9, dans lequel le message comprend un fichier de support sous la forme d'un fichier sonore agencé de façon à être synchronisé avec au moins un autre fichier de support d'un autre type.

11. Dispositif de communication portable selon l'une quelconque des revendications 8 à 10, dans lequel le message comprend un fichier de support sous la forme d'un fichier d'image agencé de façon à être synchronisé avec au moins un autre fichier de support d'un autre type.

12. Dispositif de communication portable selon l'une quelconque des revendications 8 à 11, dans lequel le message comprend un fichier de support sous la forme d'un fichier de texte agencé de façon à être synchronisé avec au moins un autre fichier de support d'un autre type.

13. Dispositif de communication portable selon l'une quelconque des revendications 8 à 12, dans lequel l'unité de traitement de message de support électronique lisible est agencée de façon à établir le message en tant que notification pour tous les événements d'un certain type.

14. Dispositif de communication portable selon l'une quelconque des revendications 8 à 12, dans lequel l'unité (24) de traitement de message de support électronique lisible est agencée de façon à établir le message en tant que notification uniquement pour certains événements d'un certain type.

15. Dispositif de communication portable selon l'une quelconque des revendications 8 à 14, dans lequel il s'agit d'un téléphone cellulaire.

16. Elément de programme informatique comportant :
un moyen à code de programme informatique pour provoquer une exécution par un dispositif de communication portable (10), lorsque ledit élément de programme est chargé dans le dispositif de communication portable,
la réception d'au moins un message de support électronique lisible provenant d'un réseau,
l'établissement du message en tant que notification d'événements associés au dispositif de communication portable, le stockage du message,
la détection de l'apparition d'un événement pour lequel le message du support électronique a été établi en tant que notification,
la récupération du message stocké, et
la lecture du message de support électronique en fonction de la détection.

17. Produit (46) à programme informatique comportant un support lisible par ordinateur, portant un élément de programme informatique selon la revendication 16.
